# EUROPÄISCHE PATENTSCHRIFT

(11) **EP 0 612 575 B1**
(45) Veröffentlichungstag und Bekanntmachung des Hinweises auf die Patenterteilung: **19.03.1997**
(21) Anmeldenummer: 93119663.8
(22) Anmeldetag: 07.12.1993
(51) Int. Cl.: B23B 51/04, B28D 1/04

(54) **Bohrwerkzeug**
Drilling tool
Outil de forage

(30) Priorität: 20.02.1993 DE 9302487 U
(43) Veröffentlichungstag der Anmeldung: 31.08.1994
(73) Patentinhaber: ROBERT BOSCH GMBH, 70442 Stuttgart (DE)
(72) Erfinder: Wahl, Günter, D-70771 Leinfelden-Echterdingen (DE); Hitzler, Horst, Dipl.-Ing., D-70771 Leinfelden-Echterdingen (DE); Fellmann, Willi, CH-4500 Solothurn (CH); Glarner, Otto, CH-4553 Subingen (CH)

(56) Entgegenhaltungen:
- DE-C- 3 107 648
- DE-U- 8 513 328
- DE-U- 8 902 472
- FR-A- 2 047 615

## Beschreibung

Die Erfindung betrifft ein Bohrwerkzeug, insbesondere zur Steinbearbeitung, nach dem Oberbegriff des Anspruchs 1. Aus dem DE-GM 89 02 472 ist bereits ein solches Bohrwerkzeug bekannt, dessen herausnehmbarer Zentrierbohrer mehrere seitliche Bolzen aufweist, die mit Spiel in randoffene, achsparalelle Schlitze in der Bohrkrone einsetzbar sind. Dieses Bohrwerkzeug hat den Nachteil, daß der Zentrierbohrer leicht herausfallen kann. Vor dem Ansetzen des Werkzeugs muß er also mit der Hand gehalten werden, zumindest dann, wenn nach unten gebohrt werden soll.

Um ein Herausfallen zu verhindern, wird in dem Dokument weiter vorgeschlagen, den Durchmesser der Langlöcher so zu wählen, daß sich die Bolzen unter leichter Reibung an den Langlöchern verschieben. Die Reibung bleibt aber in der praktischen Anwendung einerseits wegen des Verschleißes und andererseits wegen möglicher Verschmutzung der Bohrkrone nicht konstant, so daß ein zuverlässiger Schutz vor Herausfallen bei leichter Demontierbarkeit des Zentrierbohrers nicht gegeben ist. Das bedeutet, daß das Bohrwerkzeug bei schweren Bohrgeräten, die mit zwei Händen gehalten werden müssen, gar nicht oder zumindest nicht ohne Gefahr verwendbar ist.

Bei einem auf dem Markt angebotenen Bohrwerkzeug sind gegen das Herausfallen des Zentrierbohrers radial abstehende, flexible Kunststofflappen angebracht, die sich gegen die Innenwand der Bohrkrone anpressen. Neben dem zusätzlichen Aufwand hat diese Lösung den Nachteil, daß zum bequemen Herausziehen des Zentrierbohrers gegen den Widerstand der Kunststofflappen die seitlichen Bolzen relativ weit aus der Bohrkrone herausstehen müssen.

### Vorteile der Erfindung

Das erfindungsgemäße Bohrwerkzeug mit dem kennzeichnenden Merkmal des Anspruchs 1 hat demgegenüber den Vorteil, daß der Zentrierbohrer bei schneller und kinderleichter Montierbarkeit ohne Hilfswerkzeug selbsthemmend in der Bohrkrone gehalten ist. Der Fertigungsaufwand ist minimal und der Zentrierbohrer kann auch bei nach unten gehaltener Bohrkrone nicht selbstätig herausfallen, da sich die Arme in den schrägstehenden Schlitzen verkeilen.

Durch die weiteren in den abhängigen Ansprüchen aufgeführten Maßnahmen läßt sich das in Anspruch 1 angegebene Bohrwerkzeug zusätzlich verbessern. Besonders vorteilhaft ist es, für die Schlitze einen Winkel von 20° bis 30°, vorzugsweise 25° zu wählen. Dies ermöglicht wegen der nur kurzen notwendigen Drehung noch eine problemlose Montage und verhindert andererseits bereits zuverlässig ein selbstätiges Herausfallen. Wenn die Breite der Schlitze etwa dem Durchmesser der Arme entspricht, insbesondere wenn ein Schiebesitz vorliegt, ergibt sich eine minimale notwendige Schlitzlänge.

### Zeichnung

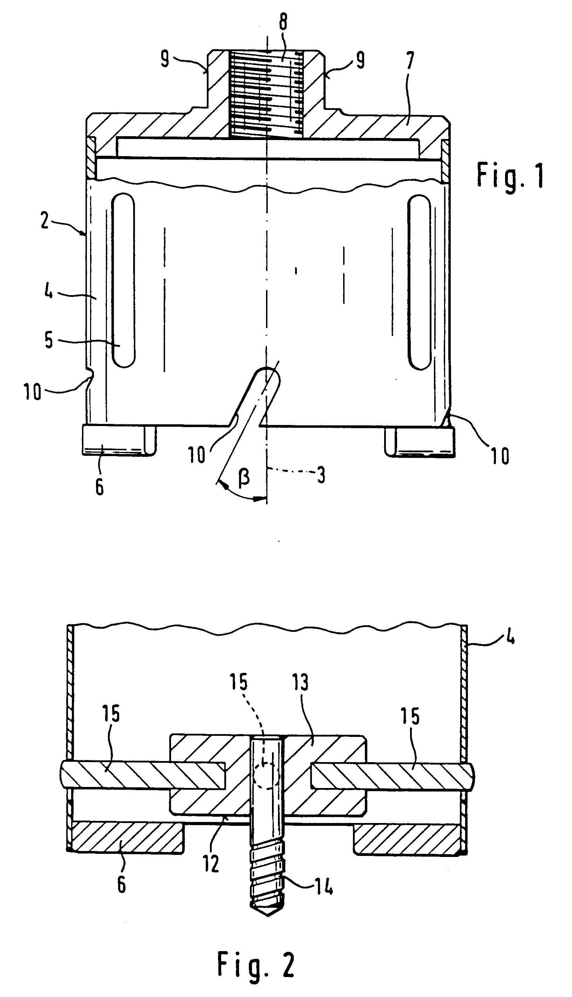

Ein Ausführungsbeispiel der Erfindung ist in der Zeichnung dargestellt und in der nachfolgenden Beschreibung näher erläutert. Figur 1 zeigt eine Seitenansicht und Figur 2 einen Querschnitt durch das erfindungsgemäße Bohrwerkzeug.

### Beschreibung des Ausführungsbeispiels

Das erfindungsgemäße Bohrwerkzeug ist als Bohrkrone 2 mit Mittelachse 3 und einem hohlzylindrischen Schneidenträger 4 ausgebildet. Der Schneidenträger 4 weist geschlossene Längsschlitze 5 in der Wandung auf, die der Kühlung dienen. An der vorderen Stirnfläche des Schneidenträgers 4 sind Schneidsegmente 6 aufgesetzt. Hinten ist der Schneidenträger 4 auf einem Halter 7 zum Aufschrauben auf die Spindel einer Bohr- oder Schlagbohrmaschine befestigt. Schneidenträger 4 und Halter 7 können auch aus einem Stück bestehen. An dem Halter 7 sind rückseitig eine Gewindebohrung 8 und parallele Schlüsselflächen 9 zum Ansetzen eines Gabelschlüssels angeordnet. In den Schneidenträger 4 sind von der vorderen Stirnfläche ausgehend rotationssymmetrisch verteilt vier randoffene Schlitze 10 eingeschnitten. Die Schlitze verlaufen unter einem Winkel β von 25° schräg zur Richtung der Mittelachse 3 der Bohrkrone, und zwar in Drehrichtung rückwärts.

Ein in Figur 2 gezeigter Zentrierbohrereinsatz 12 weist einen flachzylindrischen Grundkörper 13 auf, in den zentrisch ein nach vorne herausstehender Zentrierbohrer 14 eingelötet ist. Radial seitlich stehen vier Arme 15 sternförmig heraus. Sie sind z.B. mit Preßpassung fest mit dem Grundkörper 13 verbunden. Die Arme 15 liegen herausnehmbar in den Schlitzen 10 des Schneidenträgers 4, so daß der Zentrierbohrer 14 zentrisch in der Bohrkrone 2 gehalten ist. Sie Überragen den Schneidenträger 4 nur geringfügig, z.B. 1 mm, was randnahes Bohren erlaubt und die Verletzungsgefahr mindert. Die Breite der Schlitze 10 entspricht mit 6 mm dem Durchmesser der Arme 15, so daß sich ein Schiebesitz ergibt. Die Länge der Schlitze 10 entspricht etwa ihrer doppelten Breite. Jedenfalls reicht eine der dreifachen Breite entsprechende Länge der Schlitze 10 aus, um ein Herausfallen des Zentrierbohrereinsatzes 12 zu verhindern.

Vor dem Ansetzen der Bohrkrone an das zu bearbeitende Gestein wird der Zentrierbohrereinsatz 12 durch einfaches Aufstecken und leichtes Linksdrehen in die Bohrkrone 2 eingesetzt. Sodann wird das anzubringende Loch solange angebohrt, bis die Schneidsegmente 5 eine kreisförmige Rinne im Gestein hinterlassen haben. Nun wird der Zentrierbohrereinsatz 12 unter leichtem Rechtsdrehen wieder herausgenommen und das Loch ohne Zentrierbohrer fertiggebohrt.

Wegen der notwendigen Drehbewegung um die Mittelachse 3 kann sich der Zentrierbohrereinsatz 12 nicht selbstätig lösen. Insbesondere deshalb, weil der Zentrierbohrereinsatz 12 kippt, wenn die Bohrkrone 2 nach unten geschwenkt wird. Dabei verkeilen sich die Arme 15 in den Schlitzen 10. Das einseitige Kippen wird zusätzlich durch Reibwertdifferenzen in den Schlitzen 10 unterstützt, die aufgrund von Fertigungstoleranzen oder Verschmutzung auftreten. Bei stark verschleißgefährdeten Bohrwerkzeugen kann der Winkel β auch größer gewählt werden. Die Neigung der Schlitze 10 wird selbstverständlich so gewählt, daß der Zentrierbohrereinsatz 12 beim Bohren in die Schlitze 10 hineingedrängt wird.

## Patentansprüche

1. Bohrwerkzeug, insbesondere zur Steinbearbeitung, mit einer hohlzylindrischen Bohrkrone (2) und einem mittig in dieser gehaltenen Zentrierbohrereinsatz (12), welcher seitlich sternförmig herausragend mindestens drei Arme (15) aufweist, die in randoffene Schlitze (10) der Bohrkrone (2) einsetzbar sind, dadurch gekennzeichnet, daß die Schlitze (10) schräg zur Richtung der Mittelachse (3) der Bohrkrone (2) angeordnet sind.

2. Bohrwerkzeug nach Anspruch 1, dadurch gekennzeichnet, daß die Schlitze (10) in einem Winkel von ca. 20 - 30° schräg zur Richtung der Mittelachse (3) verlaufen.

3. Bohrwerkzeug nach Anspruch 1 oder 2, dadurch gekennzeichnet, daß die Breite der Schlitze (10) dem Durchmesser der Arme (15) entspricht.

4. Bohrwerkzeug nach einem der vorhergehenden Ansprüche, dadurch gekennzeichnet, daß die Arme (15) mit Schiebesitz in den Schlitzen (10) aufgenommen sind.

5. Bohrwerkzeug nach einem der vorhergehenden Ansprüche, dadurch gekennzeichnet, daß die Schlitze (10) etwa doppelt so lang wie breit sind.

6. Bohrwerkzeug nach einem der vorhergehenden Ansprüche, dadurch gekennzeichnet, daß die Arme (15) den Schneidenträger (4) nur geringfügig überragen.

7. Bohrwerkzeug nach einem der vorhergehenden Ansprüche, dadurch gekennzeichnet, daß der Schneidenträger (4) Längsschlitze (5) zur Kühlung der Bohrkrone (2) aufweist.

## Claims

1. Drilling tool, in particular for stone working, having a hollow-cylindrical annular bit (2) and a centring-drill insert (12) which is held concentrically in the annular bit (2) and has at least three arms (15) which project laterally in a star shape and can be inserted into slots (10), open at the margin, of the annular bit (2), characterized in that the slots (10) are arranged obliquely to the direction of the centre axis (3) of the annular bit (2).

2. Drilling tool according to Claim 1, characterized in that the slots (10) run at an angle of about 20 - 30° obliquely to the direction of the centre axis (3).

3. Drilling tool according to Claim 1 or 2, characterized in that the width of the slots (10) corresponds to the diameter of the arms (15).

4. Drilling tool according to one of the preceding claims, characterized in that the arms (15) are accommodated in the slots (10) by a sliding fit.

5. Drilling tool according to one of the preceding claims, characterized in that the slots (10) are approximately twice as long as they are wide.

6. Drilling tool according to one of the preceding claims, characterized in that the arms (15) project only slightly beyond the cutting-edge carrier (4).

7. Drilling tool according to one of the preceding claims, characterized in that the cutting-edge carrier (4) has longitudinal slots (5) for cooling the annular bit (2).

## Revendications

1. Outil de forage, en particulier pour le travail de la pierre avec une couronne cylindrique creuse de forage (2) et un insert de centrage de forage (12), maintenu au milieu de celle-ci, qui présente au moins trois bras (15) faisant saillie latéralement en forme d'étoile, bras qui peuvent être insérés dans des fentes (10) ouvertes sur le bord de la couronne de forage (2),
caractérisé en ce que
les fentes (10) sont disposées obliquement par rapport à la direction de l'axe central (3) de la couronne de forage (2).

2. Outil de forage selon la revendication 1,
caractérisé en ce que
les fentes s'étendent en formant un angle d'environ 20° à 30° obliquement par rapport à la direction de l'axe central (3).

3. Outil de forage selon la revendication 1 ou 2,
caractérisé en ce que
la largeur des fentes (10) correspond au diamètre des bras (15).

4. Outil de forage selon l'une des revendications précédentes,
caractérisé en ce que
les bras (15) sont logés dans les fentes (10) avec un appui coulissant.

5. Outil de forage selon l'une des revendications précédentes,
caractérisé en ce que
les fentes (10) sont à peu près deux fois plus longues que larges.

6. Outil de forage selon l'une des revendications précédentes,
caractérisé en ce que
les bras (15) dépassent seulement très légèrement le support des taillants (4).

7. Outil de forage selon l'une des revendications précédentes,
caractérisé en ce que
le support des taillants (4) présente les fentes longitudinales (5) servant à refroidir la couronne de forage (2).
